# EUROPEAN PATENT SPECIFICATION

(11) **EP 2 915 685 B1**
(45) Date of publication and mention of the grant of the patent: **19.12.2018**
(21) Application number: 14175276.6
(22) Date of filing: 01.07.2014
(51) Int. Cl.: B60C 11/11, B60C 11/13

(54) **TIRE WITH SEGMENTED CONTACT SURFACE**
REIFEN MIT EINER SEGMENTIERTEN KONTAKTFLÄCHE
PNEU À SURFACE DE CONTACT SEGMENTÉE

(30) Priority: 03.03.2014 US 201414195618
(43) Date of publication of application: 09.09.2015
(73) Proprietor: Marui, Shinji, Nada-Ku, Kobe 657-0032 (JP)
(72) Inventor: Marui, Shinji, Nada-Ku, Kobe 657-0032 (JP)
(74) Representative: V.O.

(56) References cited:
- WO-A1-03/047886
- CA-A1- 2 176 519
- FR-A- 589 911
- GB-A- 443 862
- JP-A- H 071 919
- JP-A- 2002 248 911
- JP-A- 2005 199 927
- US-A1- 2010 200 136

## Description

### BACKGROUND OF THE INVENTION

### 1. Field of the Invention

The invention relates generally to tires for bicycles and vehicles.

### 2. Description of Prior Art and Related Information

Tire treads provide grip by generating friction with the ground surface. Too little friction may enable ease of riding with less resistance, such as with a road bicycle, but provide insufficient traction for certain terrains and road conditions. Therefore, a need exists to improve tire friction.

US 2010/0200136 A1 relates to a tire utilizing a replaceable tread surface to enable variable tread characteristics determined by a removable riding surface. The tire body defines a slot that extends circumferentially around the tire and receives the removable riding surface. The removable riding surface is attached within the slot by attachment mechanisms. In other embodiments, the variable tread is accomplished via a removable sleeve that fits over the existing tire

CA 2,176,519 A1 relates to objects (for example, tires, shoe soles, skies, etc.) which need to make contact with a solid surface in order to achieve motion, remain in motion, or prevent motion. It is known that linear edges and pointed edges can be added to surfaces which are put in motion. This may be done using three dimensional geometrical or mathematical figures called modules. These three dimensional figures have slopes rising from their base at between zero degrees and one hundred and eighty degrees.

### SUMMARY OF THE INVENTION

According to the invention is provided a bicycle tire according to claim 1.

### BRIEF DESCRIPTION OF THE DRAWINGS

FIG. 1 - FIG. 15 show examples of tires not covered by the claims, but useful for understanding the invention.
FIG. 1 is a perspective view of a tire with segmented contact surface lines;
FIG. 2 is a cross-sectional view of the tire of FIG. 1;
FIG. 3 is another cross-sectional view of the tire of FIG. 1;
FIG. 4 is a perspective view of a tire with segmented contact surface lines;
FIG. 5 is a cross-sectional view of the tire of FIG. 4;
FIG. 6 is a another cross-sectional view of the tire of FIG. 4;
FIG. 7 is a perspective view of a tire with segmented contact surface lines;
FIG. 8 is a cross-sectional view of the tire of FIG. 7;
FIG. 9 is a another cross-sectional view of the tire of FIG. 7;
FIG. 10 is a perspective view of a tire with contact surfaces;
FIG. 11 is a cross-sectional view of the tire of FIG. 10;
FIG. 12 is yet another cross-sectional view of the tire of FIG. 10;
FIG. 13 is a perspective view of a tire with contact surfaces;
FIG. 14 is a cross-sectional view of the tire of FIG. 13;
FIG. 15 is another cross-sectional view of the tire of FIG. 13;
FIG. 16 is a top view of a first preferred embodiment of a tire with segmented contact surface lines;
FIG. 17 is a perspective view of the first preferred embodiment of the tire;
FIG. 18 is a cross-sectional view of the first preferred embodiment of the tire;
FIG. 19 is another cross-sectional view of the first preferred embodiment of the tire;
FIG. 20 is a top view of a second preferred embodiment of a tire with segmented contact surface lines;
FIG. 21 is a cross-sectional view of the second preferred embodiment of the tire;
FIG. 22 is a top view of a third preferred embodiment of a tire with segmented contact surface lines;
FIG. 23 is a perspective view of the third preferred embodiment of the tire;
FIG. 24 is a cross-sectional view of the third preferred embodiment of the tire;
FIG. 25 is another cross-sectional view of the third preferred embodiment of the tire;
FIG. 26 is a perspective view of a fourth preferred embodiment of a tire with contact surfaces;
FIG. 27 is a cross-sectional view of the fourth preferred embodiment of the tire;
FIG. 28 is another cross-sectional view of the fourth preferred embodiment of the tire;
FIG. 29 is yet another cross-sectional view of the fourth preferred embodiment of the tire;
FIG. 30 is a top view of the fourth preferred embodiment of the tire.

The invention and its various embodiments can now be better understood by turning to the following detailed description wherein illustrated embodiments are described. It is to be expressly understood that the illustrated embodiments are set forth as examples and not by way of limitations on the invention as ultimately defined in the claims.

### DETAILED DESCRIPTION OF THE PREFERRED EMBODIMENTS

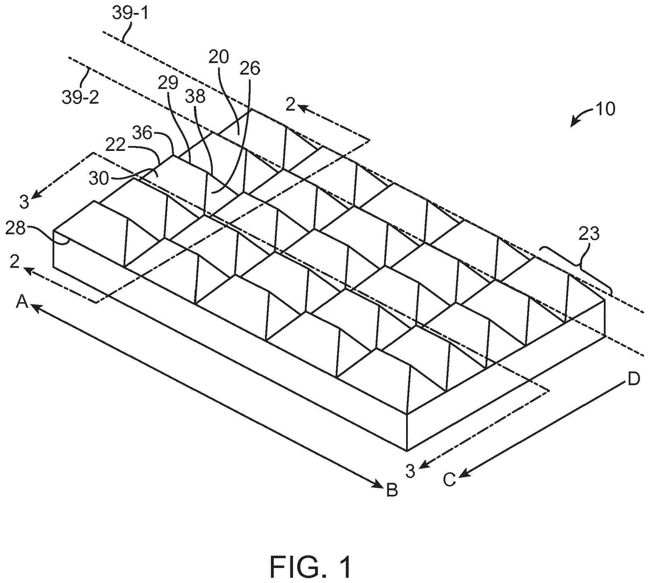

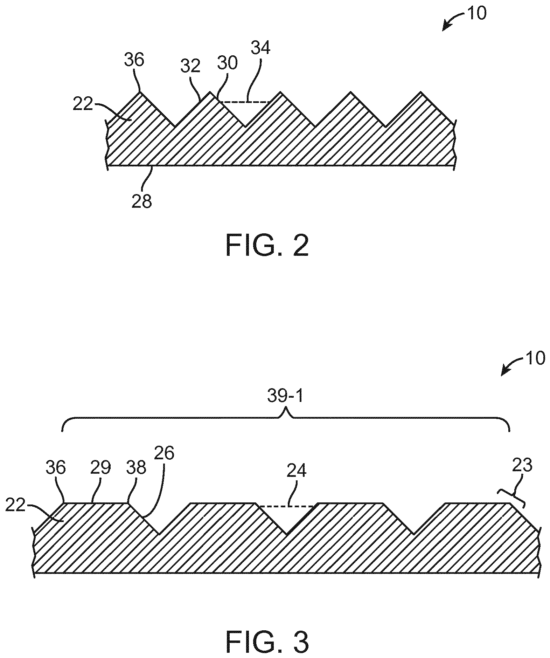

A tire with contact surfaces is illustrated in FIGS. 1-3 and designated generally by the reference numeral 10. The tire 10 may be configured for use with bicycles, scooters, motorcycles, automobiles, trucks, tractors and any other ground vehicle or toy requiring tires.

Throughout the specification, the positional and directional terms below refer to the following:
- "A - B direction" shall refer to the direction of a tire from a sidewall to the opposite sidewall, i.e., the width.
- "C - D direction" shall refer to the length-wise direction of a tire.

In FIG. 1, the tire 10 comprises a plurality of tire knobs 20 that collectively form a tread pattern. The knobs 20 may comprise a variety of geometric shapes.Here, all the knobs 20 are preferably identical in structure and aligned in the same direction. Each knob 20 defines a knob top and a knob bottom. The knob bottom, or simply bottom, is attached to or contiguous with the circumferential wall of the tire 10. The knob top is the radially outermost portion of the knob that is configured to contact the ground when the tire 10 rolls. Therefore, the contact surface of each knob comprises the knob top.

In FIGS. 1-3, each knob 20 comprises a geometric wedge 23 defined by a rectangular knob bottom 28, a pair of quadrilateral surfaces 30, 32 that meet at the top to form a contact surface that comprises a ridge 29, along with a pair of triangular ends 22, 26. The triangular ends 22, 26 have respective apexes 36, 38 that are connected by the ridge 29. In this embodiment, the contact surface of each knob is linear. As illustrated, each wedge 23 is preferably symmetrical with two identical opposing quadrilateral surfaces 30, 32, and two identical triangular opposing ends 22, 26, all extending upward from a rectangular bottom 28. In this embodiment, the shape of the quadrilateral surfaces 30, 32 preferably comprises a trapezoid and, more specifically, an isosceles trapezoid.

The knobs 20 are arranged in rows such that the ridges 29 are linearly aligned in order to collectively form an extended contact surface line that is segmented, or simply a segmented contact surface line 39-1, 39-2. Alternatively stated, a segmented contact surface line 39-1, 39-2, comprises a row of linear contact surfaces, i.e., ridges, that are linearly or axially aligned and spaced apart by end gaps.

A first row of knobs 20 is positioned end to end to form a first segmented contact surface line 39-1, which is adjacent to a second row of linearly aligned knobs 20 forming a second segmented contact surface line 39-2. As illustrated in FIGS. 1-3, the first segmented contact surface line 39-1 comprises a row of symmetrical wedges 23 oriented in the A-B direction, wherein an edge of the triangular end 22 of one symmetrical wedge 23 touches an edge of the triangular end 26 of the adjacent symmetrical wedge 23, creating a linear groove 24 between adjacent wedges 23.

In FIGS. 1-3, a plurality of segmented contact surface lines 39-1, 39-2 are parallel in the A-B direction, wherein an edge of the quadrilateral surface 32 of one symmetrical wedge 23 abuts an edge of the quadrilateral surface 30 of the adjacent symmetrical wedge 23, creating a transversal groove 34 between adjacent wedges 23. It can be appreciated that the combination of the linear groove 24 and the transversal groove 34 provide multiple channels to allow water and particles to pass through the channels and away from the surface of the tread to improve traction of the tire 10 as it rolls over a ground surface.

Alternatively, a tire may be substantially similar as shown in FIGS. 1-3 except that the wedges are oriented in the C-D direction, namely perpendicular to that of FIGS. 1-3.

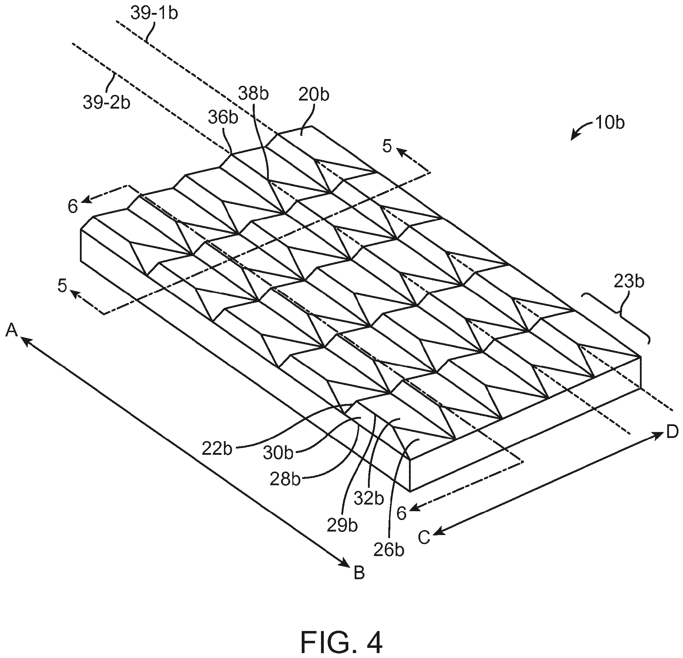

FIGS. 4-6 illustrate a tire with segmented contact surface 10b, where elements of similar structure are designated by the same reference numerals followed by the lower case "b."

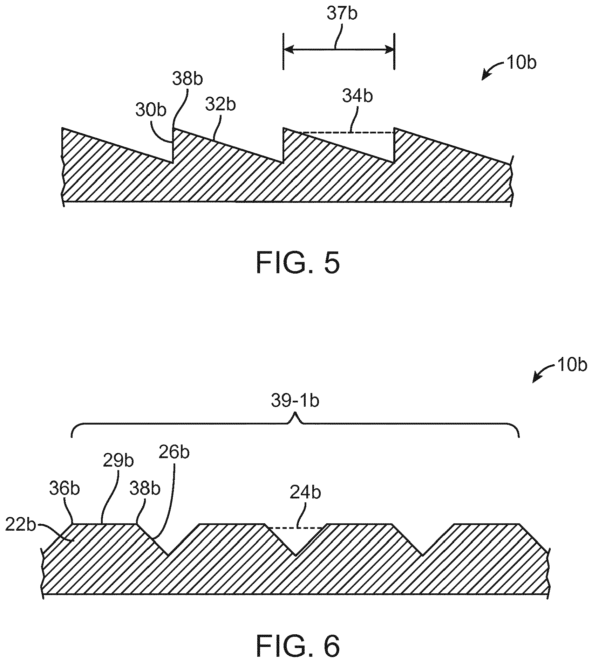

In FIGS. 4-6, the tire 10b comprises a plurality of tire knobs 20b. The knobs 20b are preferably identical in structure and aligned in the same direction. Each knob 20b comprises an asymmetrical geometric wedge 23b defined by a rectangular bottom 28b, a minor quadrilateral surface 30b, a major quadrilateral surface 32b, wherein the quadrilateral surfaces 30b, 32b meet at the top to form a ridge 29b, along with a pair of triangular ends 22b, 26b. The triangular ends 22b, 26b have respective apexes 36b, 38b that are connected by the ridge 29b. The ridge 29b forms the point of contact of the tire 10b with a ground surface. As illustrated, the minor quadrilateral surface 30b has less surface area and a shorter distance from its bottom edge to the ridge 29b than the major quadrilateral surface 32b, such that the ridge 29b is off the center of the rectangular bottom 28b to form the asymmetrical wedge 23b. As shown in FIG. 5, each ridge 29b is preferably off-centered with respect to a midpoint of the width 37b of each knob 20b. Similar to FIGS. 1-3, the knobs 20b are arranged in rows such that the ridges 29b are linearly aligned in order to collectively form a segmented contact surface line that meets the ground.

A first row of knobs 20b may be positioned end to end to form a first segmented contact surface line 39-1b, which is adjacent to a second row of linearly aligned knobs 20b forming a second segmented contact surface line 39-2b. As illustrated in FIGS. 4-6, the first segmented contact surface line 39-1b comprises a row of asymmetrical wedges 23b oriented in the A-B direction, wherein an edge of the triangular end 22b of one asymmetrical wedge 23b touches an edge of the triangular end 26b of the adjacent asymmetrical wedge 23b, creating a linear groove 24b between adjacent wedges 23b.

In FIGS. 4-6, a plurality of segmented contact surface lines 39-1b, 39-2b are parallel in the A-B direction and touching each other, wherein an edge of the major quadrilateral surface 32b of one asymmetrical wedge 23b abuts an edge of the minor quadrilateral surface 30b of the adjacent asymmetrical wedge 23b, creating a transversal groove 34b between adjacent wedges 23b. It can be appreciated that the combination of the linear groove 24b and the transversal groove 34b provide multiple channels to allow water and particles to pass through the channels and away from the surface of the tread to improve traction.

Alternatively, a tire may be substantially similar to FIGS. 4-6 except that the knobs are oriented in the C-D direction, namely perpendicular to that of FIGS. 4-6.

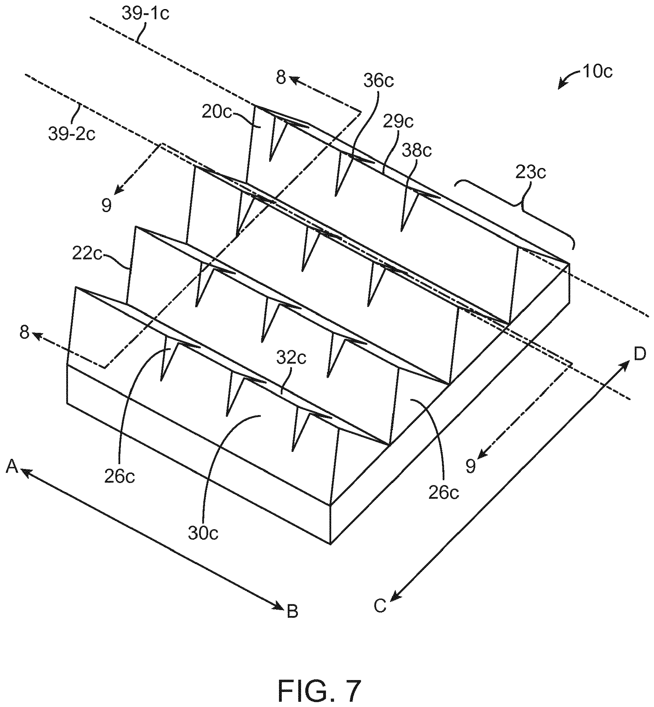

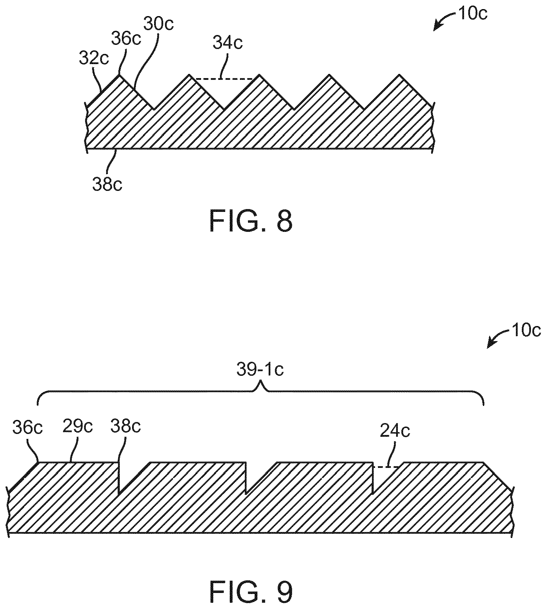

In FIGS. 7-9, a tire with segmented contact surface 10c is provided, where elements of similar structure are designated by the same reference numerals followed by the lower case "c."

In FIGS. 7-9, the tire 10c comprises a plurality of tire knobs 20c. The knobs 20c are preferably aligned in the same direction. Each knob 20c comprises a geometric wedge 23c defined by a rectangular bottom 28c, a pair of trapezoidal surfaces 30c, 32c that meet at the top to form a ridge 29c, along with a pair of triangular ends 22c, 26c. The triangular ends 22c, 26c have respective apexes 36c, 38c that are connected by the ridge 29c. The ridge 29c forms the point of contact of the tire 10c with a ground surface. In this embodiment, the shape of the trapezoidal surfaces 30c, 32c is not an isosceles trapezoid, but is instead preferably a scalene trapezoid which may include a right trapezoid.

The knobs 20c are arranged in rows such that the ridges 29c are linearly aligned in order to collectively form a segmented contact surface line when the tire 10c meets the ground.

A first row of knobs 20c may be positioned end to end to form a first segmented contact surface line 39-1c, which is adjacent to a second row of linearly aligned knobs 20c forming a second segment contact surface line 39-2c. As illustrated in FIGS. 7-9, the first segmented contact surface line 39-1c comprises a row of symmetrical wedges 23c oriented in the A-B direction, wherein the respective trapezoidal surfaces 30c of the symmetrical wedges 23c are fused together to form one continuous side surface 31c, the respective trapezoidal surfaces 32c of the symmetrical wedges 23c are fused together to form another continuous side surface 33c, and the adjacent wedges 23c are segmented by linear grooves 24c between ridges 29c that do not entirely bisect from top to bottom.

In FIGS. 7-9, a plurality of segmented contact surface lines 39-1c, 39-2c are parallel in the A-B direction and touching each other, wherein an edge of the trapezoidal surface 32c of one symmetrical wedge 23c abuts an edge of the trapezoidal surface 30c of the adjacent symmetrical wedge 23c, creating a transversal groove 34c between adjacent wedges 23c.

Alternatively, a tire may be substantially similar to FIGS. 7-9 except that the knobs are oriented in the C-D direction, namely perpendicular to that of FIGS. 7-9.

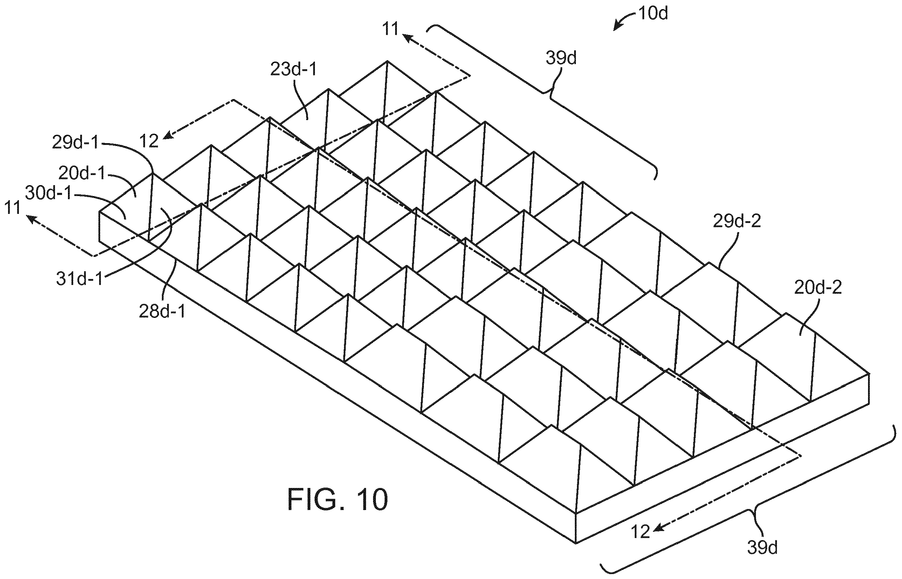

FIGS. 10-12 illustrate a tire 10d where elements of similar structure are designated by the same reference numerals followed by the lower case "d."

In FIGS. 10-12, the tire 10d comprises a first plurality of uniform tire knobs 20d-1 where the contact surfaces 29d-1 comprises apexes. A second plurality of knobs 20d-2 substantially similar to those shown in FIGS. 1-3, is disposed adjacent to the first plurality of knobs 20d-1. Thus, the second plurality of knobs has contact surfaces that comprise ridges 29d-2.

In the first plurality of knobs 29d-1, each knob 20d-1 comprises a symmetrical pentahedron or a pyramid 23d-1 defined by a square bottom 28d-1, four identical triangular surfaces 30d-1, 31d-1, 33d-1 and 35d-1 that meet at the top at an apex point 29d-1. The apex point 29d-1 forms the point of contact of this portion of the tire 10d with a ground surface.

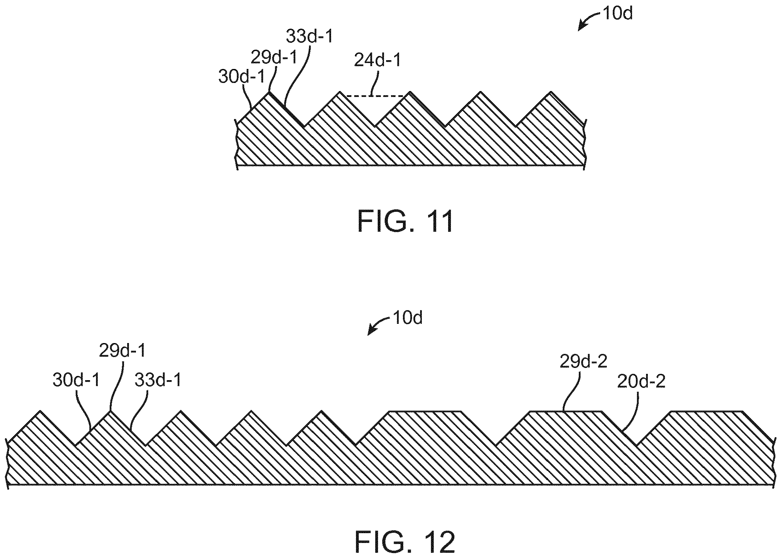

The first plurality of knobs 20d-1 are aligned with the linear ridges 29d-2 in the second plurality in order to collectively form a an extended contact surface that comprises both segmented lines and separate dots in each row. As shown in FIGS. 11-12, as one edge of the pyramid 23d-1 touches another edge of the adjacent pyramid 23d-1, a groove 24d-1 is disposed between apex points 29d-1.

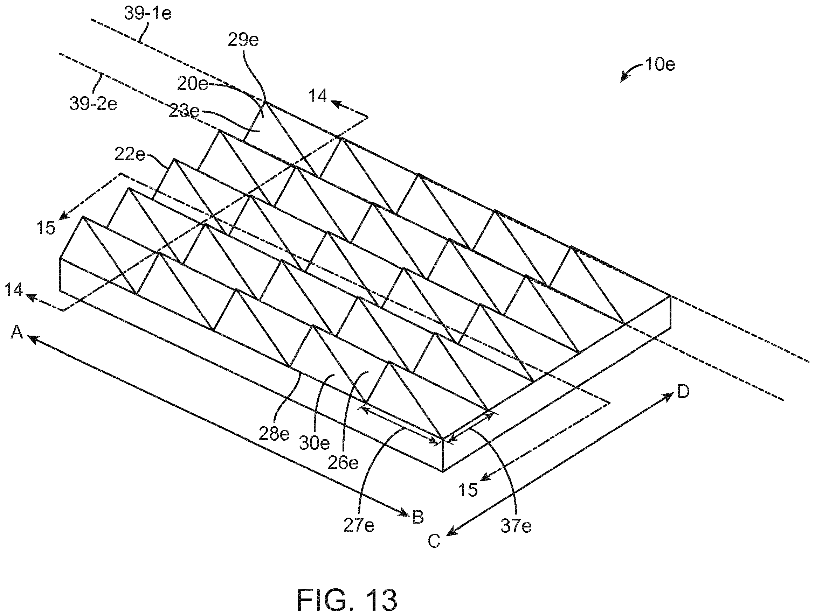

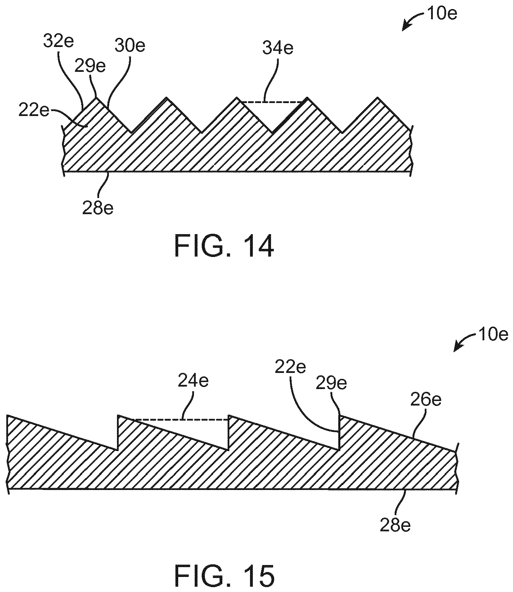

FIGS. 13-15 show a tire 10e, where elements of similar structure are designated by the same reference numerals followed by the lower case "e."

In FIGS. 13-15, the tire 10e comprises a plurality of uniform tire knobs 20e. Preferably, the knobs 20e are identical in structure and aligned in the same direction. Each knob 20e comprises an asymmetrical pentahedron or a pyramid 23e defined by a rectangular bottom 28e, a pair of nonisosceles triangular surfaces 30e, 32e, a triangular end 22e, and an elongated triangular end 26e, wherein the surfaces 30e, 32e and the triangular ends 22e, 26e meet at the top at an apex point 29e.

The rectangular bottom, or base, 28e comprises a width 37e and a length 27e. Accordingly, the center of the base is where the midpoint of the width 37e and the midpoint of the length 27e meet. In FIGS. 13-15, each contact surface 29e comprises an apex 29e that is off-centered with respect to the rectangular bottom 28e.

The knobs 20e are arranged in rows such that the apex points 29e are linearly aligned in order to collectively form a dotted array of contact surfaces when the tire 10e meets the ground.

A first row of knobs 20e may be positioned end to end to form a linear array of contact surfaces 39-1e, which is adjacent to a second row of linearly aligned knobs 20e forming a second array of contact surfaces 39-2e. As illustrated in FIG. 13, the first linear array of contact surfaces 39-1e comprises a row of asymmetrical pyramids 23e oriented in the A-B direction, wherein an edge of the triangular end 22e of one asymmetrical pyramid 23e touches an edge of the elongated triangular end 26e of the adjacent asymmetrical pyramid 23e, creating a linear groove 24e between adjacent wedges 23e.

Further, a plurality of contact surfaces 39-1e, 39-2e are parallel in the A-B direction and touching each other, wherein an edge of the nonisosceles triangular surface 32e of one asymmetrical pyramid 23e abuts an edge of the nonisosceles triangular surface 30e of the adjacent asymmetrical pyramid 23e, creating a transversal groove 34e between adjacent wedges 23e. It can be appreciated that the combination of the linear groove 24e and the transversal groove 34e provide multiple channels to allow water and particles to pass through the channels and away from the surface of the tread to improve traction.

Alternatively, a tire may be substantially similar to FIGS. 13-15 except that the knobs are oriented in the C-D direction, namely perpendicular to that of FIGS. 13-15.

The following preferred embodiments of a tire with contact surfaces present more complex patterns that combine the different orientations of tire knobs and contact surface points and lines. For illustration purposes only and not as a limitation, knobs having similar shape and elements as the symmetrical wedge 23 described in view of FIGS. 1-3 above will be used in these subsequent embodiments. It is to be understood that knobs of any geometric shape, length and size can be used uniformly or in different combinations throughout the tire tread in the following preferred embodiments described below.

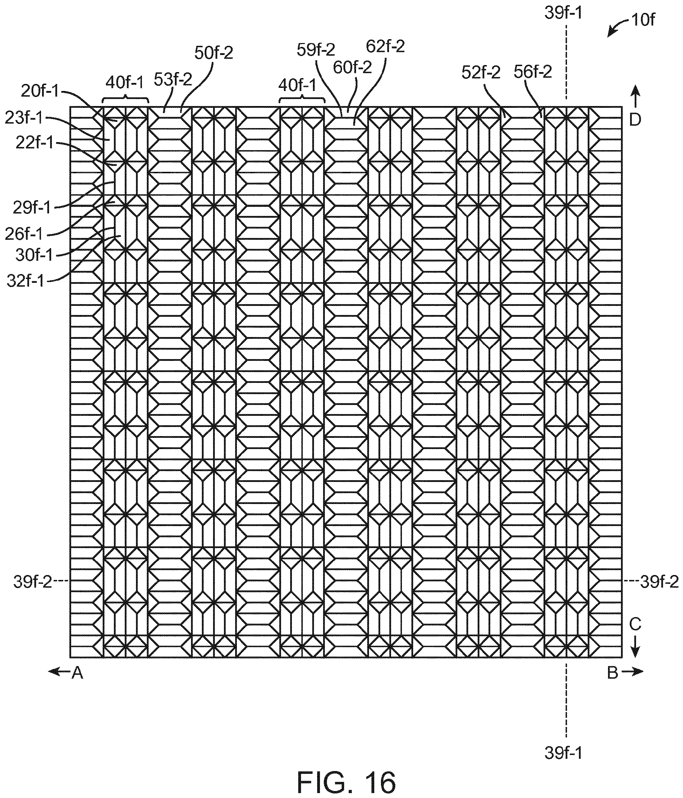

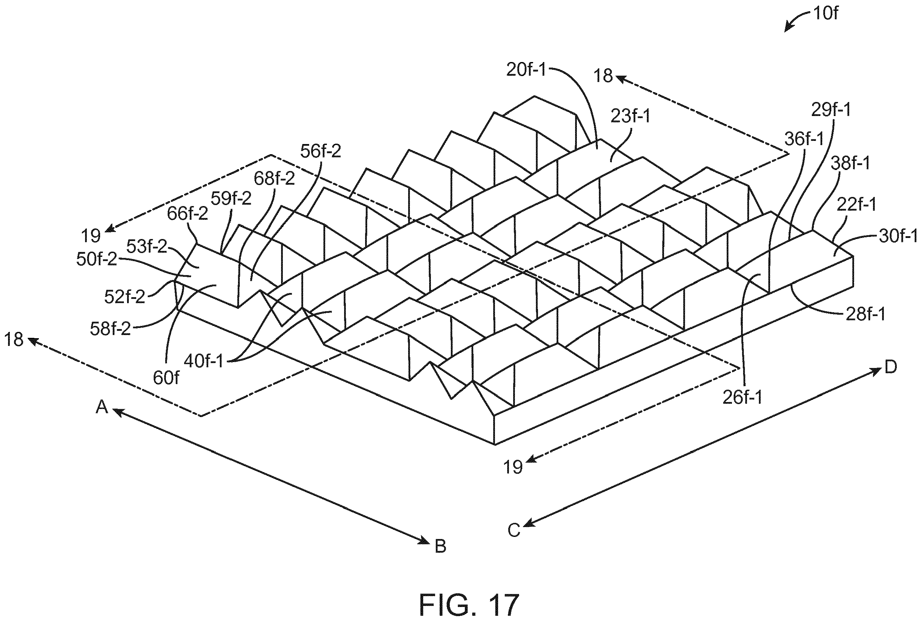

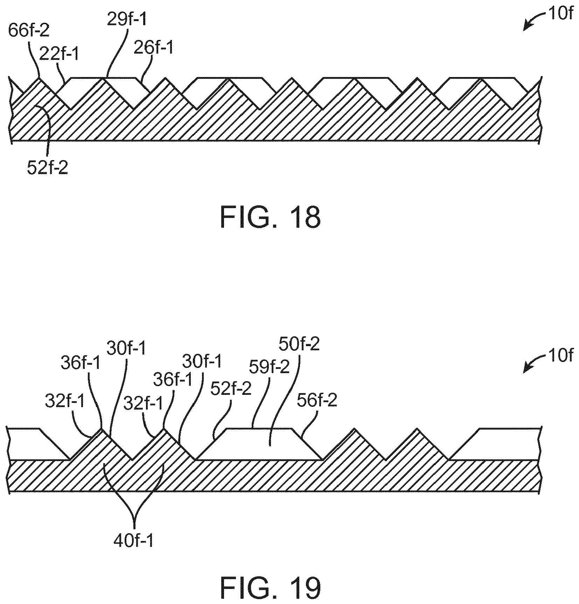

FIGS. 16-19 illustrate a first preferred embodiment of a tire 10f, where elements of similar structure are designated by the same reference numerals followed by the lower case "f."

In this embodiment, the tire 10f comprises a first plurality of tire knobs 20f-1 preferably identical in structure and aligned in a first C-D direction and a second plurality of tire knobs 50f-2 preferably identical in structure and aligned in a second A-B direction that is not parallel to the first direction. For illustration purposes and not as a limitation, each first knob 20f-1 comprises a geometric wedge 23f-1 similar to the symmetrical wedge 23 described in view of FIGS. 1-3 above, where elements of similar structure are designated by the same reference numerals followed by the lower case "f." Further, each first knob 20f-1 may preferably be positioned adjacent to another first knob 20f-1 to form a pair of first knobs 40f-1.

As shown in FIG. 16, a first row of C-D knobs 20f-1 may be positioned end to end in the C-D direction to form a first plurality of segmented contact surface lines 39f-1, which are perpendicular to a second plurality of segmented contact surface lines 39f-2. The first plurality of segmented contact surface lines 39f-1 are parallel in the C-D direction, while the second plurality of segmented contact surface lines 39f-2 are parallel in the A-B direction.

Similarly, each A-B knob 50f-2 comprises a geometric wedge 53f-2 defined by a rectangular bottom 58f-2, a pair of quadrilateral surfaces 60f-2, 62f-2 that meet at the top to form a ridge 59f-2, along with a pair of triangular ends 52f-2, 56f-2. The triangular ends 22f-2, 26f-2 have respective apexes 66f-2, 68f-2 that are connected by the ridge 59f-2. The ridge 59f-2 forms the point of contact of the tire 10f-2 with a ground surface. Unlike the second knobs 20f-2, each second knob 50f-2 is oriented in the A-B direction. Further, unlike the A-B knobs 20f-1, the C-D knobs 50f-2 are positioned side to side in the C-D direction to form segmented contact surface lines 39f-2 in the C-D direction. In other words, in this configuration, an edge of the quadrilateral surface 62f-2 of one symmetrical wedge 53f-2 abuts an edge of the quadrilateral surface 60f-2 of the adjacent symmetrical wedge 53f-2 in the C-D direction.

As shown in FIGS. 16-17, a plurality of the first segmented contact surface lines 39-f1 and the second segmented contact surface lines 39-f2 are positioned adjacent to the a plurality of the third segmented contact surface lines 39-f3, such that the first knobs 20f-1 and the second knobs 50f-2 are substantially perpendicular to each other.

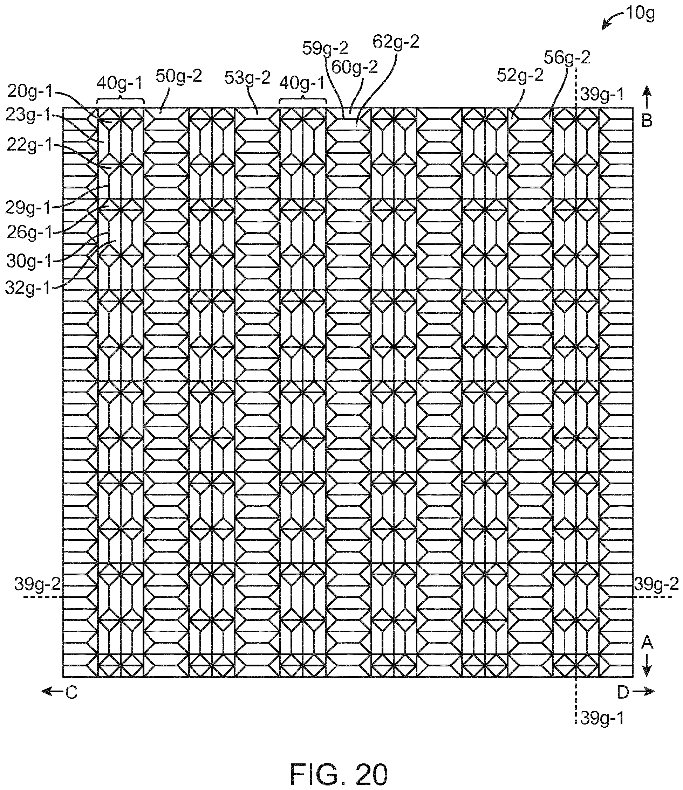

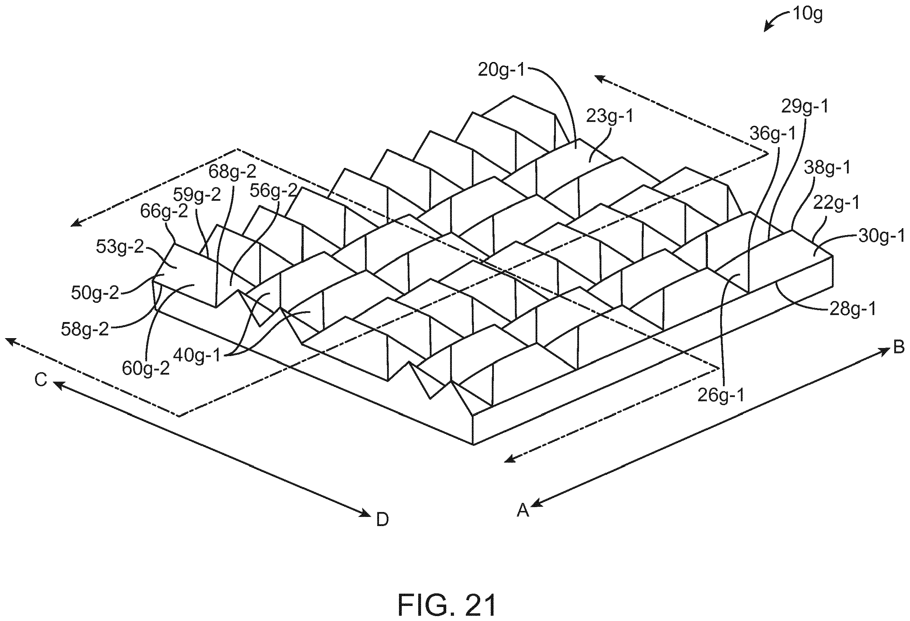

FIGS. 20-21 illustrate a second preferred embodiment of a tire with segmented contact surface 10g, where elements of similar structure are designated by the same reference numerals followed by the lower case "g."

In this embodiment, the tire 10g comprises a first plurality of A-B tire knobs 20g-1 preferably identical in structure and aligned in a first A-B direction and a second plurality of C-D tire knobs 50g-2 are preferably identical in structure and aligned in a second C-D direction that is not parallel to the first direction. For illustration purposes and not as a limitation, each first knob 20g-1 comprises a geometric wedge 23g-1 similar to the symmetrical wedge 23 described in view of FIGS. 1-3 above, where elements of similar structure are designated by the same reference numerals followed by the lower case "g." Further, each first knob 20g-1 may preferably be positioned adjacent to another first knob 20g-1 to form a pair of first knobs 40g-1.

As shown in FIG. 20, the first plurality knobs 20g-1 may be positioned end to end in the A-B direction to form a first plurality of segmented contact surface lines 39g-1, which are non-parallel to a second plurality of segmented contact surface lines 39g-2. In this embodiment, the first plurality of segmented contact surface lines 39g-1 are preferably perpendicular to the second plurality of segmented contact surface lines 39g-2.

For illustration purposes and not as a limitation, each C-D knob 50g-2 comprises a geometric wedge 53g-2 similar to the symmetrical wedge 53f-2 described above, where elements of similar structure are designated by the same reference numerals followed by the lower case "g." As shown in FIG. 20, each C-D knob 50g-2 is oriented in the C-D direction.

The second knobs 50g-2 are positioned side to side in the A-B direction to form a third segmented contact surface line 39-3g. In other words, in this configuration, an edge of the quadrilateral surface 62g-2 of one symmetrical wedge 53g-2 abuts an edge of the quadrilateral surface 60g-2 of the adjacent symmetrical wedge 53g-2 in the A-B direction.

As shown in FIGS. 20-21, a plurality of the first segmented contact surface lines 39-1g and the second segmented contact surface lines 39-2g are positioned adjacent to the a plurality of the third segmented contact surface lines 39-3g, such that the first knobs 20g-1 and the second knobs 50g-2 are substantially perpendicular to each other.

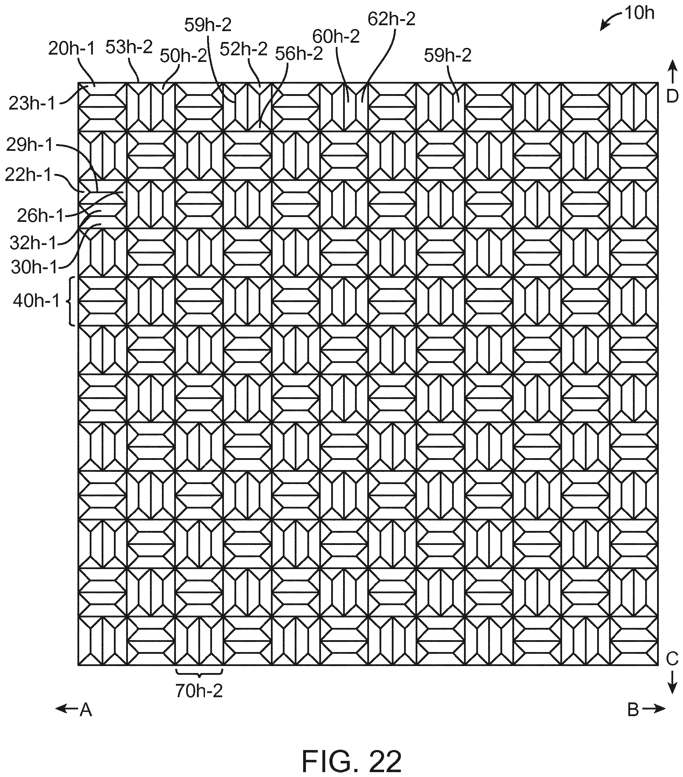

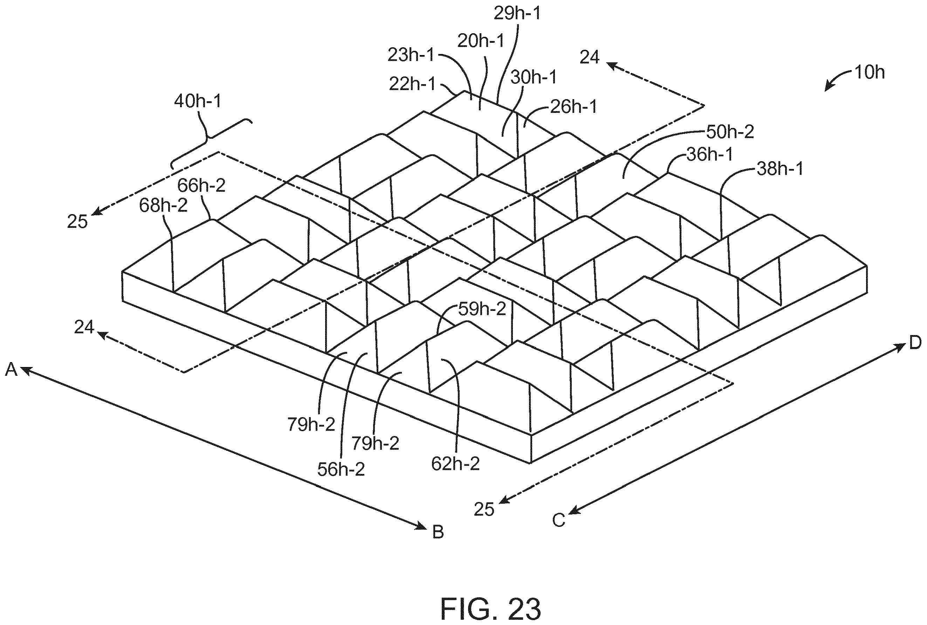

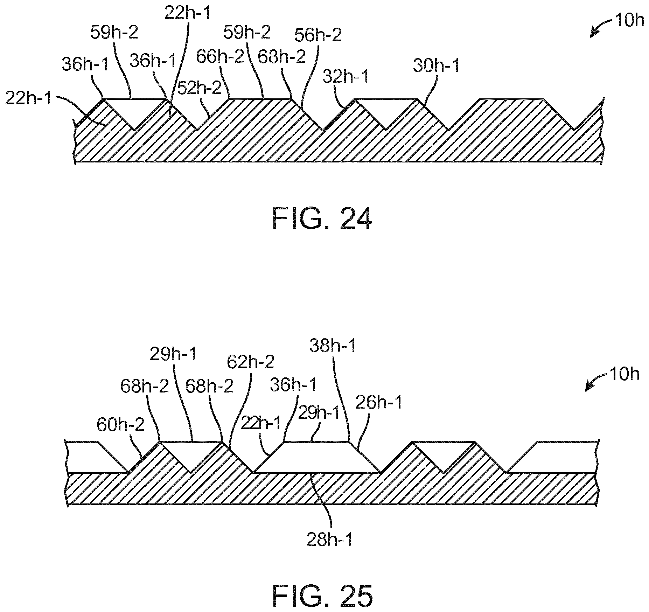

FIGS. 22-25 illustrate an third preferred embodiment of a tire 10h, where elements of similar structure are designated by the same reference numerals followed by the lower case "h."

In this embodiment, the tire 10h comprises a first plurality of tire knobs 20h-1 preferably identical in structure and aligned in a first A-B direction and a second plurality of tire knobs 50h-2 preferably identical in structure and aligned in a second C-D direction that is not parallel to the first direction. Each knob 20h-1comprises a geometric wedge 23h similar to the symmetrical wedge 23 described in view of FIGS. 1-3 above. Similarly, each C-D knob 50h-2 comprises a geometric wedge 53h-2 similar to the symmetrical wedge 53f-2 described above, where elements of similar structure are designated by the same reference numerals followed by the lower case "g."

According to a preferred embodiment, a first pair 40h-1 of first knobs 20h-1 is positioned adjacent to each other side to side in the A-B direction, wherein the edges of their respective quadrilateral surfaces are touching each other. Similarly, a second pair 70h-2 of second knobs 50h-2 is positioned in the C-D direction, wherein the edges of their respective quadrilateral surfaces are touching each other. The first pair 40h-1 and the second pair 70h-2 are positioned adjacent to each other, such that abutting first knobs 20h-1 and second knobs 50h-2 are substantially perpendicular to each other. Consequently, a plurality of abutting first pair 40h-1 and second pair 70h-2 provides a tire tread having an interwoven matrix that significantly improves traction with a ground surface.

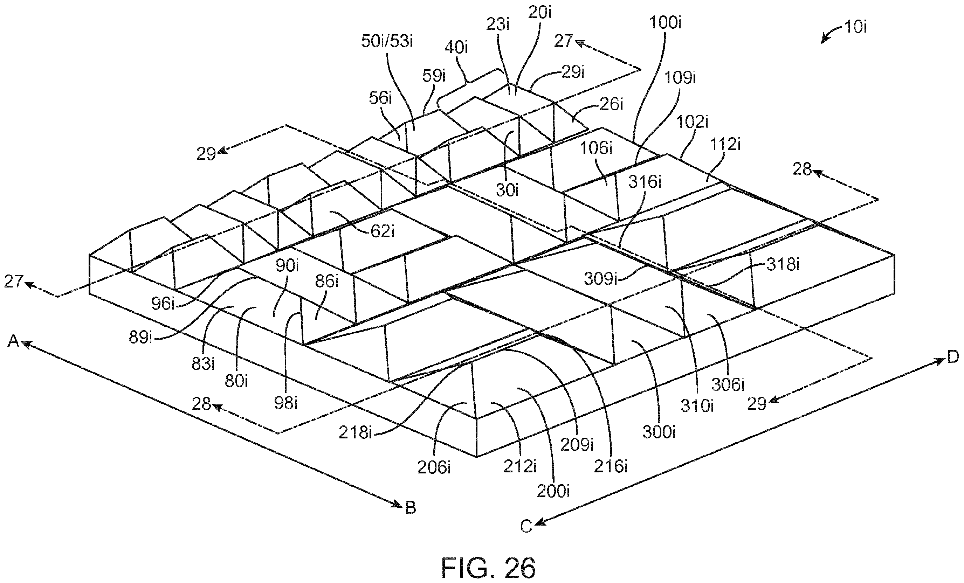

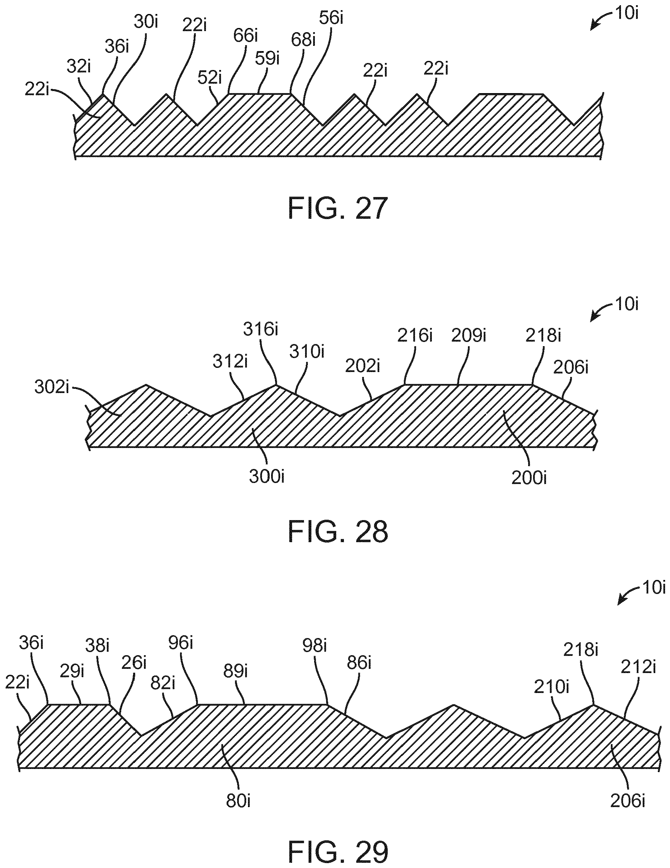

FIGS. 26-30 illustrate a fourth preferred embodiment of a tire 10i, where elements of similar structure are designated by the same reference numerals followed by the lower case "i."

In this embodiment, the tire 10i comprises a first plurality of tire knobs 20i aligned in a first A-B direction, a second plurality of tire knobs 50i in a second C-D direction that is not parallel to the first A-B direction, a third plurality of tire knobs 80i aligned in the first A-B direction, a fourth plurality of fourth tire knobs 100i in the second C-D direction, a fifth plurality of tire knobs 200i in the second C-D direction and a sixth plurality of tire knobs 300i in the first A-B direction.

For illustration purposes and not as a limitation, each of the knobs 20i, 50i, 80i, 100i, 200i, and 300i comprises a geometric wedge similar to the symmetrical wedge 23 described in view of FIGS. 1-3 above. For instance, each first knob 20i comprises a geometric wedge 23i defined by a rectangular bottom 28i, a pair of quadrilateral surfaces 30i, 32i that meet at the top to form a ridge 29i, along with a pair of triangular ends 22i, 26i. The triangular ends 22i, 26i have respective apexes 36i, 38i that are connected by the ridge 29i. The ridge 29i forms the point of contact of the tire 10i with a ground surface. Preferably, each first knob 20i is positioned adjacent to another first knob 20i to form a first pair of knobs 40i.

Similarly, each second knob 50i comprises a geometric wedge 53i defined by a rectangular bottom 58i, a pair of quadrilateral surfaces 60i, 62i that meet at the top to form a ridge 59i, along with a pair of triangular ends 52i, 56i. The triangular ends 52i, 56i have respective apexes 66i, 68i that are connected by the ridge 59i. The ridge 59i forms the point of contact of the tire 10i with a ground surface. Preferably, each second knob 50i is positioned adjacent to another second knob 50i to form a second pair of knobs 70i.

Each third knob 80i comprises a geometric wedge 83i defined by a rectangular bottom 88i, a pair of quadrilateral surfaces 90i, 92i that meet at the top to form a ridge 89i, along with a pair of triangular ends 82i, 86i. The triangular ends 82i, 86i have respective apexes 96i, 98i that are connected by the ridge 89i. The ridge 89i forms the point of contact of the tire 10i with a ground surface. Preferably, each third knob 80i is positioned adjacent to another third knob 80i to form a third pair of knobs 81i.

Each fourth knob 100i comprises a geometric wedge 103i defined by a rectangular bottom 108i, a pair of quadrilateral surfaces 110i, 112i that meet at the top to form a ridge 109i, along with a pair of triangular ends 102i, 106i. The triangular ends 102i, 106i have respective apexes 116i, 118i that are connected by the ridge 109i. The ridge 109i forms the point of contact of the tire 10i with a ground surface. Preferably, each fourth knob 100i is positioned adjacent to another fourth knob 100i to form a fourth pair of knobs 101i.

Each fifth knob 200i comprises a geometric wedge 203i defined by a rectangular bottom 208i, a pair of quadrilateral surfaces 210i, 212i that meet at the top to form a ridge 209i, along with a pair of triangular ends 202i, 206i. The triangular ends 202i, 206i have respective apexes 216i, 218i that are connected by the ridge 209i. The ridge 209i forms the point of contact of the tire 10i with a ground surface. Preferably, each fifth knob 200i is positioned adjacent to another fifth knob 200i to form a fifth pair of knobs 201i.

Each sixth knob 300i comprises a geometric wedge 303i defined by a rectangular bottom 308i, a pair of quadrilateral surfaces 310i, 312i that meet at the top to form a ridge 309i, along with a pair of triangular ends 302i, 306i. The triangular ends 302i, 306i have respective apexes 316i, 318i that are connected by the ridge 309i. The ridge 309i forms the point of contact of the tire 10i with a ground surface. Preferably, each sixth knob 300i is positioned adjacent to another sixth knob 300i to form a sixth pair of knobs 301i.

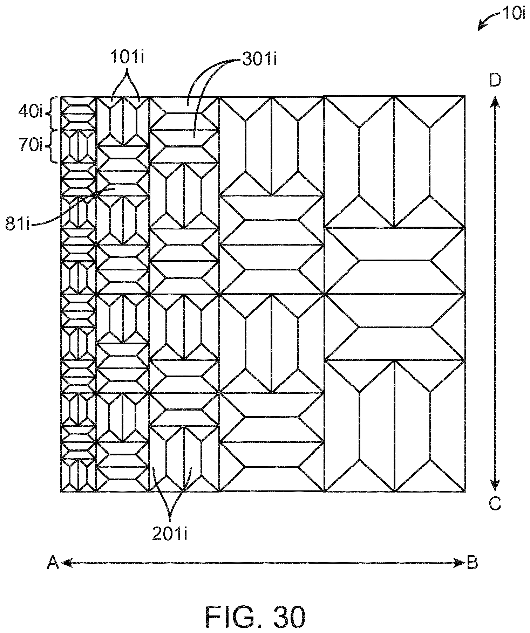

As readily seen in FIGS.26 and 30, the knobs vary significantly in length and size, including the height of the contact surfaces relative to those of adjacent knobs. In a preferred embodiment, the first knobs 20i and the second knobs 50i are of the same length and size relative to each other, the third knobs 80i and the fourth knobs 100i are of the same length and size relative to each other, and the fifth knobs 200i and the sixth knobs 300i are of the same length and size relative to each other. By way of example and not as a limitation, the first knobs 20i and the second knobs 50i are the shortest in length and smallest in size, while the fifth knobs 200i and the sixth knobs 300i are the longest in length and largest in size. Referring to FIGS. 26-30, it should be noted that although the knobs have varying length and sizes, they may maintain the same height or have different heights. Further, it can be appreciated that the varying length, size and orientation of the knobs provide effective channels to allow water to pass through the channels and away from the surface of the tread to improve traction of the tire 10i.

According to a preferred embodiment, the knobs 20i, 50i, 80i, 100i, 200i, and 300i are positioned in a similar alternating fashion as the third embodiment described above. For example, as illustrated in FIGS. 26 and 30, the first pair of knobs 40i is oriented in the A-B direction, abutting the second pair of knobs 70i oriented in the C-D direction on one end and the fourth pair of knobs 101i oriented in the C-D direction on another end. In this configuration, a plurality of abutting knobs provides a tire tread having an intricate interwoven matrix of varying lengths and sizes that provides excellent traction with a ground surface.

It is to be understood that in an alternative embodiment, the respective orientations of the knobs in the above fourth embodiment can be reversed. For example, the first plurality of knob pairs can be oriented in the C-D direction, while the second plurality of knob pairs can be oriented in the A-B direction and so forth.
Many alterations and modifications may be made by those having ordinary skill in the art without departing from the scope of the invention. Therefore, it must be understood that the illustrated embodiments have been set forth only for the purposes of examples and that they should not be taken as limiting the invention as defined by the following claims.

## Claims

1. Bicycle tire (10f, 10g, 10h, 10i), comprising:
a plurality of tire knobs;
a first segmented contact surface line (39f-1, 39g-1) formed from a first set of tire knobs selected from the plurality of tire knobs; and
a second segmented contact surface line (39f-2, 39g-2, 39h-2, 39i-2) formed from a second set of tire knobs selected from the plurality of tire knobs;
wherein each segmented contact surface line comprises a row of linearly aligned ridges (29f-1, 29g-1, 29h-1) which are formed at the top of each tire knob, each of the tire knobs having triangular ends (22f-1, 26f-1, 22g-1, 26g-1, 22h-1, 26h-1) that have apexes (36f-1, 36g-1, 36h-1, 36i-1) that are connected by the ridge (29f-1, 29g-1, 29h-1);
**characterized in that** the first segmented contact surface line includes two segmented contact surface lines formed from two adjacent ones of the first set of tire knobs, each of the two segmented contact surface lines oriented in a first direction, and the second segmented contact surface line intersects the first segmented contact surface line and is oriented in a second direction that is not parallel to the first direction.

2. The bicycle tire of claim 1, wherein:
the second segmented contact surface line is substantially perpendicular to the first segmented contact surface line.

3. The tire of any one of claims 1-2, wherein:
the first segmented contact surface line has a first length; and
the second segmented contact surface line has a second length longer than the first length.

4. The tire of any one of claims 1-3, wherein each of the first segmented contact surface line and the second segmented contact surface line are created from a geometric wedge (23f-1, 23g-1, 23h-1) defined by a rectangular bottom (28f-1, 28g-1, 28h-1), a pair of quadrilateral surfaces (30f-1, 32f-1, 30g-1, 32g-1, 30h-1, 32h-1) that meet at the top to form a ridge (29f-1, 29g-1, 29h1), a pair of triangular ends and the ridge is in contact with a ground.

5. The tire of any one of claims 1-4, further comprising:
a first knob (20i) that comprises a first linear contact surface;
a second knob (80i) that comprises a second linear contact surface;
a third knob (50i) that comprises a third linear contact surface; and
a fourth knob (100i) that comprises a fourth linear contact surface,
wherein the first linear contact surface and the second linear contact surface are aligned and collectively form the first segmented contact surface line, and
wherein the third linear contact surface and the fourth linear contact surface are aligned and collectively form the second segmented contact surface line.

6. The tire of claim 5, wherein:
the first knob includes a base defining a base length, a base width, and a center; and
the first linear contact surface is off-centered with respect to a center of the base.

## Patentansprüche

1. Fahrradreifen (10f, 10g, 10h, 10i), umfassend:
eine Vielzahl von Reifenknöpfen;
eine erste segmentierte Kontaktoberflächenlinie (39f-1, 39g-1), gebildet von einem ersten Satz von Reifenknöpfen, ausgewählt aus der Vielzahl von Reifenknöpfen; und
eine zweite segmentierte Kontaktoberflächenlinie (39f-2, 39g-2, 39h-2, 39i-2), gebildet von einem zweiten Satz von Reifenknöpfen, ausgewählt aus der Vielzahl von Reifenknöpfen;
wobei jede segmentierte Kontaktoberflächenlinie eine Reihe von linear ausgerichteten Kämmen (29f-1, 29g-1, 29h-1) umfasst, die oben auf jedem Reifenknopf gebildet werden, jeder der Reifenknöpfe versehen mit dreieckigen Enden (22f-1, 22f-1, 22g-1, 22h-1, 26h-1), die Scheitel (36f-1, 36g-1, 36h-1, 36i-1) haben, die durch den Kamm (29f-1, 29g-1, 29h-1) verbunden sind;
**dadurch gekennzeichnet, dass** die erste segmentierte Kontaktoberflächenlinie zwei segmentierte Kontaktoberflächenlinien umfasst, gebildet von zwei benachbarten des ersten Satzes von Reifenknöpfen, und die zweite segmentierte Kontaktoberflächenlinie die erste segmentierte Kontaktoberflächenlinie schneidet und in einer zweiten Richtung, die nicht parallel zu der ersten Richtung ist, ausgerichtet ist.

2. Fahrradreifen nach Anspruch 1, wobei:
die zweite segmentierte Kontaktoberflächenlinie im Wesentlichen senkrecht zu der ersten segmentierten Kontaktoberflächenlinie ist.

3. Fahrradreifen nach einem der Ansprüche 1-2, wobei:
die erste segmentierte Kontaktoberflächenlinie eine erste Länge hat; und
die zweite segmentierte Kontaktoberflächenlinie eine weite Länge, länger als die erste Länge, hat.

4. Reifen nach einem der Ansprüche 1-3, wobei jede der ersten segmentierten Kontaktoberflächenlinie und der zweiten segmentierten Kontaktoberflächenlinie erstellt werden anhand eines geometrischen Keils (23f-1, 23g-1, 23h-1), definiert von einem rechteckigen Boden (28f-1, 28g-1, 28h-1), einem Paar vierseitiger Oberflächen (30f-1, 32f-1, 30g-1, 32g-1, 30h-1, 32h-1), die oben aufeinandertreffen, um einen Kamm (29f-1, 29g-1, 29h-1) zu bilden, einem Paar dreieckiger Enden, und der Kamm in Kontakt mit einem Boden ist.

5. Reifen nach einem der Ansprüche 1-4, ferner umfassend:
einen ersten Knopf (20i), der eine erste lineare Kontaktoberfläche umfasst;
einen zweiten Knopf (80i), der eine zweite lineare Kontaktoberfläche umfasst;
einen dritten Knopf (50i), der eine dritte lineare Kontaktoberfläche umfasst; und
einen vierten Knopf (100i), der eine vierte lineare Kontaktoberfläche umfasst,
wobei die erste lineare Kontaktoberfläche und die zweite lineare Kontaktoberfläche ausgerichtet sind und zusammen die erste segmentierte Kontaktoberflächenlinie bilden, und
wobei die dritte lineare Kontaktoberfläche und die vierte lineare Kontaktoberfläche ausgerichtet sind und zusammen die zweite segmentierte Kontaktoberflächenlinie bilden.

6. Reifen nach Anspruch 5, wobei:
der erste Knopf eine Basis umfasst, definierend eine Basislänge, eine Basisbreite und eine Mitte; und
die erste lineare Kontaktoberfläche exzentrisch in Bezug auf eine Mitte der Basis ist.

## Revendications

1. Pneu de bicyclette (10f, 10g, 10h, 10i) comprenant :
une pluralité de pavés de pneu ;
une première ligne de surface de contact segmentée (39f-1, 39g-1) formée d'un premier ensemble de pavés choisis parmi la pluralité de pavés ; et
une deuxième ligne de surface de contact segmentée (39f-2, 39g-2, 39h-2, 39i-2) formée d'un deuxième ensemble de pavés choisis parmi la pluralité de pavés ;
dans lequel chaque ligne de surface de contact segmentée comprend une rangée de crêtes linéairement alignées (29f-1, 29g-1, 29h-1) qui sont formées au sommet de chaque pavé, chacun des pavés ayant des extrémités triangulaires (22f-1, 26f-1, 22g-1, 26g-1, 22h-1, 26h-1) qui ont des pointes (36f-1, 36g-1, 36h-1, 36i-1) qui sont reliées par la crête (29f-1, 29g-1, 29h-1) ;
**caractérisé en ce que** la première ligne de surface de contact segmentée comprend deux lignes de surface de contact segmentées formées par deux pavés voisins du premier ensemble de pavés, chacune des deux lignes de surface de contact segmentées étant orientée dans une première direction, et la deuxième ligne de surface de contact segmentée coupe la première ligne de surface de contact segmentée et est orientée dans une deuxième direction qui n'est pas parallèle à la première direction.

2. Pneu de bicyclette selon la revendication 1, dans lequel :
la deuxième ligne de surface de contact segmentée est substantiellement perpendiculaire à la première ligne de surface de contact segmentée.

3. Pneu de bicyclette selon l'une quelconque des revendications 1 à 2, dans lequel :
la première ligne de surface de contact segmentée a une première longueur ; et
la deuxième ligne de surface de contact segmentée a une deuxième longueur, plus grande que la première longueur.

4. Pneu de bicyclette selon l'une quelconque des revendications 1 à 3, dans lequel la première ligne de surface de contact segmentée et la deuxième ligne de surface de contact segmentée sont créées à partir d'un coin géométrique (23f-1, 23g-1, 23h-1) défini par un fond rectangulaire (28f-1, 28g-1, 28h-1), une paire de surfaces quadrilatérales (30f-1, 32f-1, 30g-1, 32g-1, 30h-1, 32h-1) qui se rejoignent au sommet pour former une crête (29f-1, 29g-1, 29h-1), une paire d'extrémités triangulaires et la crête est en contact avec un sol.

5. Pneu de bicyclette selon l'une quelconque des revendications 1 à 4, comprenant en outre :
un premier pavé (20i) qui comprend une première surface de contact linéaire ;
un deuxième pavé (80i) qui comprend une deuxième surface de contact linéaire ;
un troisième pavé (50i) qui comprend une troisième surface de contact linéaire ; et
un quatrième pavé (100i) qui comprend une quatrième surface de contact linéaire,
dans lequel la première surface de contact linéaire et la deuxième surface de contact linéaire sont alignées et forment collectivement la première ligne de surface de contact segmentée, et
dans lequel la troisième surface de contact linéaire et la quatrième surface de contact linéaire sont alignées et forment collectivement la deuxième ligne de surface de contact segmentée.

6. Pneu selon la revendication 5, dans lequel :
le premier pavé comprend une base qui définit une longueur de base, une largeur de base et un centre ; et
la première surface de contact linéaire est décentrée par rapport au centre de la base.
